(19) Europäisches Patentamt
European Patent Office
Office européen des brevets

(11) EP 1 363 122 A1

# (12) EUROPEAN PATENT APPLICATION

(43) Date of publication:
**19.11.2003 Bulletin 2003/47**

(51) Int Cl.[7]: **G01N 27/414**

(21) Application number: **02076942.8**

(22) Date of filing: **17.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Wageningen Universiteit**
**6700 HB Wageningen (NL)**

(72) Inventors:
- **Sudhölter, Ernst Jan Robert**
  **4148 CM Deil (NL)**
- **Zuilhof, Han**
  **6721 GZ Bennekom (NL)**
- **Sieval, Alexander Bernardus**
  **9734 CN Groningen (NL)**
- **de Smet, Louis Cornelia Patrick Maria**
  **6701 BR Wageningen (NL)**
- **Visser, Gerben Machiel**
  **3824 AS Amersfoort (NL)**
- **Bergveld, Piet**
  **7531 LJ Enschede (NL)**
- **Olthuis, Wouter**
  **7514 CL Enschede (NL)**
- **Faber, E. J.**
  **7511 ER Enschede (NL)**

(74) Representative: **Prins, Hendrik Willem et al**
**Arnold & Siedsma,**
**Advocaten en Octrooigemachtigden,**
**Sweelinckplein 1**
**2517 GK Den Haag (NL)**

## (54) Method for producing a hybrid organic silicon field effect transistor structure

(57) The invention relates to a method for producing a hybrid organic silicon field effect transistor structure, comprising the steps of:

i) providing a group IV element based semiconductor substrate provided with a source region, gate region and drain region, having at least in the gate region a surface with hydrogen terminated group IV elements; and
ii) covering at least the gate region with an organic monolayer by covalently reacting monolayer forming molecules with terminated hydrogen of the group IV elements at the surface, which monolayer forming molecules comprise a proximal terminated hydrogen reactive group and a spacer group and to a hybrid organic silicon field effect transistor structure as obtainable with the method.

EP 1 363 122 A1

## Description

The present invention relates to a method for producing a hybrid organic silicon field effect transistor structure and to such hybrid organic silicon field effect transistor structure obtainable by such a method.

Hereafter, the hybrid organic silicon field effect transistor structure will be referred to as HOSFET.

In the prior art is known an ion sensitive field effect transistor (ISFET). An ISFET comprises a semiconductor substrate provided with n-doted regions for the source region and for the drain region, and further a p-doted region for the gate region. It is noted that the source and gate region may also be p-doted and then the gate region should be n-doted. This gate region is provided with a silicon dioxide insulating layer. This insulating layer is covered by a buffer comprising hydrogel, which has as its top layer a plastic layer which optionally may comprise a sensitive substance. This laminated construction has a thickness in the range of 10-30 μm. The silicon dioxide insulating layer is sensitive towards and adversely affected by water-penetration, hydrolysis and metal ion contamination.

The invention has for its object to improve this FET type of structures, such that the sensitivity is improved due to an improvement of the signal/noise ratio.

The present invention is based on the finding that the laminate on the semiconductor substrate in an ISFET may be substituted by an organic monolayer which is covalently bond to the semiconductor substrate. Accordingly, the production of an HOSFET is simpler, requires less steps and due to its reduced size may be used for measurements in less voluminous samples or integrated circuit of chip size.

Accordingly, the present invention provides a method for producing a hybrid organic silicon field effect transistor structure, comprising the steps of:

i) providing a group IV element based semiconductor substrate provided with a source region, gate region and drain region, having at least in the gate region a surface with hydrogen terminated group IV elements; and
ii) covering at least the gate region with an organic monolayer by covalently reacting monolayer forming molecules with terminated hydrogen of the group IV elements at the surface, which monolayer forming molecules comprise a proximal terminated hydrogen reactive group and a spacer group.

In an HOSFET changes in the interfacial potential at the covalently bond organic monolayer has an effect on the source- drain current at a fixed source-drain voltage. A change in the interfacial potential is compensated by a change of voltage between a reference electrode and the semiconductor substrate in such a manner that the source-drain current is kept constant at the set source- drain voltage. The change in voltage is monitored as a function of the change in composition of the sample to which the HOSFET is exposed.

The semiconductor substrate is generally based on a group IV element. Examples are silicon and germanium. Silicon is the preferred group IV element for the semiconductor substrate. Using conventional methods the source region, the gate region and the drain region are provided in the semiconductor substrate. Electrical connections are formed following conventional procedures.

The organic monolayer is covalently bond to hydrogen of the hydrogen terminated semiconductor surface, such as hydrogen terminated silicon atoms. Such hydrogen atoms are produced at the semiconductor surface by any suitable treatment, such as a HF-treatment whereby hydroxyl groups at the surface are replaced to terminated hydrogen atoms of the underlying semiconductor substrate.

The organic monolayer is formed from monolayer forming molecules, which comprise a proximal group which is reactive with the terminated hydrogen, and comprise further a spacer group. This monolayer forming molecules have such a length that the organic monolayer formed covalently on the semiconductor substrate has a thickness of at least 0.5 nm, preferably of at least 0.7 nm. The terminated hydrogen atoms at the semiconductor substrate surface are not all reacting with the monolayer forming molecules. These monolayer forming molecules commensurate with available terminated hydrogen atoms in relation to available space and steric hindrance. The spacer group of the monolayer forming molecules form distal of the semiconductor substrate an ordered region, thereby forming a water and electrical insulated monolayer. Preferably, the organic monolayer has a thickness within the range of 0.7-2.5 nm and more preferably within the range of 0.8-2.2 nm.

After the reaction of the proximal reactive group with the terminated hydrogen, a carbon-silicon covalent bond or oxygen-silicon bond has been formed. Preferably, the hydrogen reactive group of the monolayer forming molecules has the formula

$$C = R_1 \qquad \text{(Ia)}$$

or

$$C \equiv R_2 \qquad \text{(Ib)}$$

wherein $R_1$ is C, O, S, or N-H, and $R_2$ is C or N. Preferably, the hydrogen reactive group is an alkylene group or an alkyne group. Other possible examples of hydrogen reactive groups are alcohols, amines, phosphines, phosphine oxides, alkyl halides and carboxylic acids (the latter results I the formation of the oxygen-silicon bond).

The spacer group of the monolayer forming molecules should be such that distal of the semiconductor substrate is formed an ordered region. Accordingly, it is preferred that the spacer group comprises an unbranched hydrocarbon chain which may comprise one or more alkylene, alkyne, or aryl groups, wherein the number of carbon atoms in the hydrocarbon chain provides an organic monolayer thickness of at least 0.5 nm, and wherein hydrogen atoms may be substituted by a fluoro atom. According to one embodiment, the spacer group comprises an unbranched $C_6$-$C_{22}$-alkyl group, preferably $C_8$-$C_{14}$ -alkyl group. According to another embodiment, the hydrogen chain comprises a $C_6$-$C_{22}$-alkylene group or preferably a $C_8$-$C_{14}$ -alkylene group. Similar conditions apply to the $C_6$-$C_{22}$-alkyne group. Optionally, these groups may be substituted with one or more phenyl groups at their proximal, distal and in between positions. Examples are given in the structures below

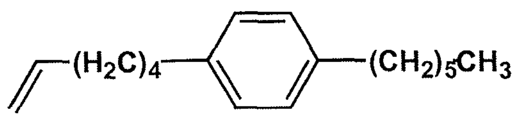

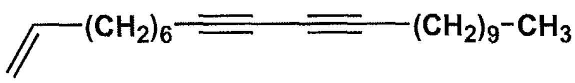

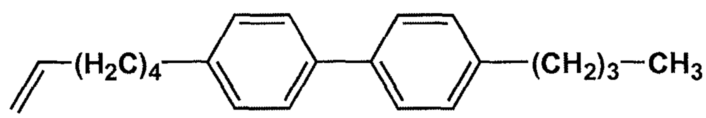

It is essential for the invention that the monolayer formed by the monolayer forming molecules commensurates via a covalent bond with a silicon atom, originally provided with a terminated hydrogen and towards the distal end the monolayer changes over from a commensurating less ordered region into a distal ordered region of monolayer forming molecules.

The distal end of monolayer forming molecules may be provided with a distal reactive group such that in the gate region the sensitivity of the HOSFET may be improved or adapted for particular purposes. Such a reactive group may be a sensitive group which imparts the HOSFET with a particular sensitivity. Examples of such sensitive groups comprise a basic group, an acidic group, an ionophore, a phenyl mercury group, an unsaturated fatty acid group optionally complexed with a metal ion, a mono- or oligo carbohydrate group, an antigen, an antibody, peptides, hormones, terpenes, etc.

The distal reactive group may be a leaving group which implies that at least part of the group is replaced in a subsequent reaction, thereby forming a sensitive group. Examplified is a phthalimide group, which by a reaction with hydrazine is converted in an amine group showing basic properties.

In order to expose optimal the reactive group, sensitive group and leaving group for a subsequent interaction with a reagent and/or agent and to maintain a substantially region in the monolayer, particularly in case of a bulky reactive group or sensitive group, it is preferred that the length of the spacer group of the layer molecules comprising a distal reactive group is larger than the length of the spacer group of the other layer molecules. The reactive group extends sufficiently beyond the surface of the monolayer if the length increase of its carrying monolayer forming molecules 1-5 carbon atoms. Preferably, the additional number of carbon atoms is 2-3 carbon atoms. It is noted that this

number of carbon atoms not only relates to alkyl, alkylene and alkyne groups, but also to the chain running through substituents within those groups.

In a preferred embodiment the semiconductor substrate is silicon and/or germanium based. Accordingly, the HOSFET is provided with one or more conductive pathes.

Although it is sufficient according to the present invention that solely the gate region is provided with the organic monolayer, it is preferred that also the source region and drain region are provided with the organic monolayer for reasons of an improved encapsulation of the surface of the semiconductor substrate. Accordingly, it is preferred that the source region and/or drain region is provided with an organic monolayer.

An other aspect of the present invention relates to the HOSFET which is obtainable by the afore mentioned method according to the invention.

The mentioned and other features and advantages of the present invention in relation to the HOSFET and its production will be made more explicit in the following more detailed description of the invention. However, it is noted that the invention is not restricted to this more detailed description.

In a preferred embodiment in relation to a silicon based semiconductor substrate, the method of the invention starts with the etching of the bare silicon surface with hydrogen fluoride to remove the native silicon bioxyde layer. Subsequently, the formed hydrogen terminated silicon surface is reacted in this example with terminal $C_6$-$C_{22}$-alkenes or alkynes. This reaction is disclosed in

Ref. 1: A.B. Sieval, A.L. Demirel, J.W.M. Nissink, M.R. Linford, J.H. van der Maas, W.H. de Jeu, H. Zuilhof, and E.J.R. Sudhölter, Highly stable Si-C linked functionalized monolayers on silicon(100) surface, Langmuir 14, 1759-1768 (1998)

Ref. 2: A.B. Sieval, R. Opitz, H.P.A. Maas, M. G. Schoeman, G. Meijer, F.J. Vergeldt, H. Zuilhof, and E.J.R. Sudhölter, Monolayers of 1-alkynes on H-terminated Si(100) surface, Langmuir, 16, 10359-10368 (2000).

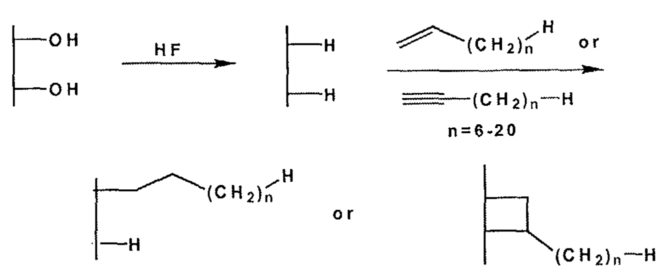


The replacement reaction has been carried out with a variety of terminal and linear alkenes and alkynes, containing by preference at least 8 carbon atoms and at the highest 22 carbon atoms. Also the reaction can be performed using polymers with alkene and/or alkyne containing proximal groups at the temini of the polymeric back bone (telechelic polymers) or with alkene and/or alkyne groups at the termini of the side chains. For the replacement reaction carried out with alkenes or alkynes with 8-22 carbon atoms, the thickness of the formed monolayer varies between 0.8 and 2.2 nanometer, respectively. For the polymers the thickness can be varied in a broader range depending on the specific polymeric properties.

Sensitivity or functionality can be introduced in this monolayer in several ways and is determined for instance by the intended use and the organic chemistry applied to the reacting terminal alkene or alkyne. It is also possible that a functionalised monolayer is subsequently grafted with another molecule to obtain another functionalised monolayer. An example is given for (omega) w- functionalised alkenes, but the same is also applicable for w-functionalised alkynes. If in the following alkene is said, it is also applicable to alkynes. If the w-functional group is a fthalimide group the replacement reaction leads to fthalimide groups at the distal or top surface.

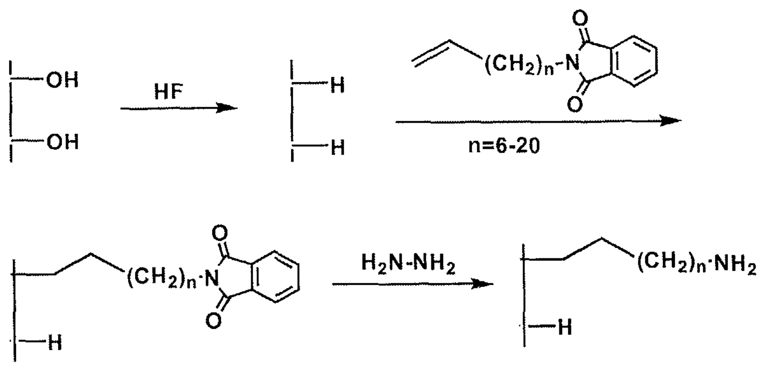


Subsequent reaction of this fthalimide functionalised monolayer with the reagent hydrazine converts the fthalimide functionality into an amine functionality. The amine group acts as a basic group and can be protonated if the pH of the solution is around the pKa value of the amine group. The extent of (de)protonation influences the surface charge state of the monolayer and this change in charge state effects the compensation voltage $\Delta V$ in the FET structure. The silicon surface can be modified with a monolayer consisting only of the omega-functionalised alkene or alkyne, and also by using mixtures of the given omega-functionalised alkene or alkyne and an unfunctionalised alkene and/or alkyne.

Also other basic functional groups, like pyridin, imidazole, and acidic groups, like carboxylic acid, sulfonic acid, can be introduced, making the sensor sensitive towards changes in the pH in the range of the pKa value of the given functional group. For every desired specific pH sensitivity an optimal functional group can be chosen and can be incorporated in the sensor. This has the advantage in comparison to conventional ISFET sensors having oxidic surfaces, like $SiO_2$ or $Ta_2O_5$, which do show a sensitivity dictated by the specific material. In this new type of sensor the freedom of choice is greatly extended. It is also possible to use mixed monolayers, i.e. monolayers containing different basic and acidic groups (different pKa values) in order to extent the pH sensitive region of the final sensor. In the case of neutral molecules the measurements are performed in the presence of a guest-conjugate molecule. The guest part of this molecule also can be bound to the receptor and the conjugate part carries a charge (cation or anion). By competitive binding the fraction of complex with the guest-conjugate varies and this gives rise to a change in voltage.

Encapsulation of on FET structures based sensors is always an important aspect on the realization of the final device. Using the above mentioned replacement reaction in combination with photo-patterning techniques, it is possible to encapsulate the sensors in a much simpler way, than by conventional encapsulation techniques. By first using a photo-mask, the gate region (between the source and drain regions) is replaced with the functional monolayer or a combination of functionalised and non-functionalised monolayer. Subsequently, the regions outside the gate region are replaced with an non-functionalised monolayer. This reaction can be performed both thermally induced and by photo-chemical treatment.

Sensitivity and selectivity towards other ions than the proton (pH) can be realized by introduction of the proper ionophoric group at the w-position of the alkene or alkyne reagent. It is also possible that such a group is grafted to an already prepared functionalised monolayer. Also this monolayer can be prepared from a pure functional alkene or alkyne or from a mixture with an inert alkene or alkyne.

An example is given below

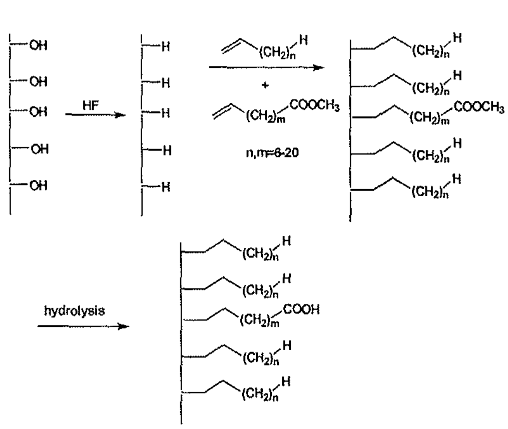


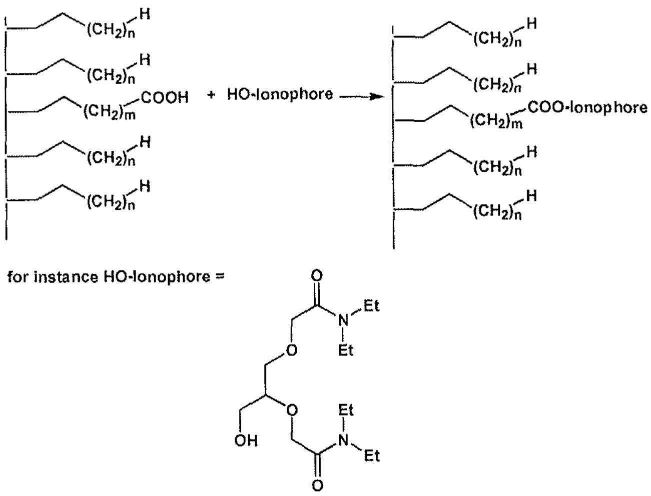


First, a mixed monolayer is prepared from an non-functional alkene of alkyne in combination with a w-$COOCH_3$ (methyl ester functionality) functionalised alkene or alkyne. Subsequently, this mixed monolayer is hydrolysed, converting the methyl ester functionality into a carboxylic acid functionality.This mixed monolayer is sensitive to changes in the pH of the electrolyte solution due to the present acidic carboxylic acid (COOH) group. In a subsequent reaction the ionophore (HO-Ionophore) is grafted to this monolayer via ester bond formation. The final sensor shows sensitivity and selectivity towards metal ions and can be compared to the sensor described in US-A-5,238,548. This shows that the manufacturing of the sensor enclosed in this application is simpler than the one described in US-A-5,238,548.

Finally, the preparation of two types of reference sensor based on a FET structure and similar to the kalomel electrode and silver-silver chloride electrode are described repectively.

Again a mixed monolayer of an inert alkene or alkyne and a w-phenyl alkene or alkyne is formed. The w-phenyl group is subsequently electrophilically substituted using mercury acetate to the indicated phenyl mercury mono acetate [Ref. 3: Taylor in: Comprehensive Chemical Kinetics, vol. 13, American Elsevier Publ.Com., New York, 1972, p. 186-194]. In the presence of chloride ions the acetate can be replaced by chloride, resulting in the formation of the phenyl mercury chloride. The final sensor is sensitive towards chloride ions. In the presence of excess of chloride, the sensor also acts as a reference electrode. A silver-silver chloride type of HOSFET sensor is made in the following way.

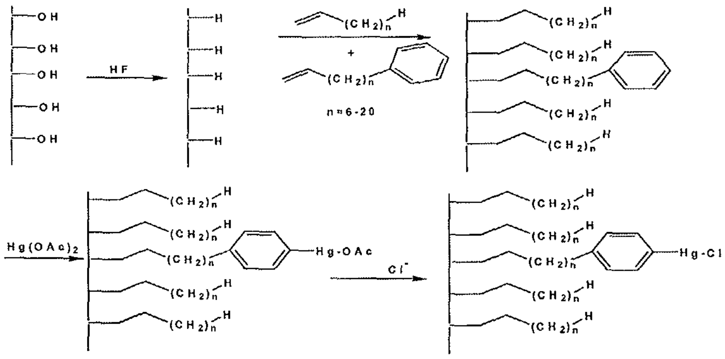


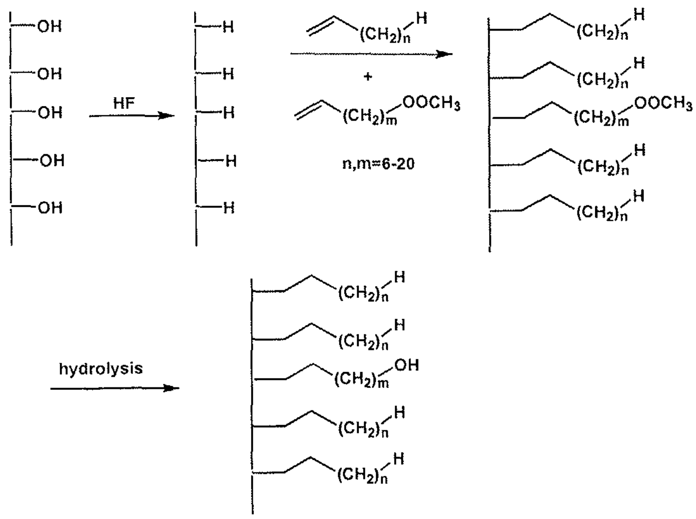


First a mixed monolayer of acetyl functionalised (OOCH3) and non-functionalised alkenes or alkynes is prepared. The acetyl functionality is hydrolysed resulting in the formation of hydroxyl functionalities at the w-position. Subsequently, the hydroxyl function is esterified using a triple unsaturated aliphatic carboxylic acid, like for instance linoleic acid.

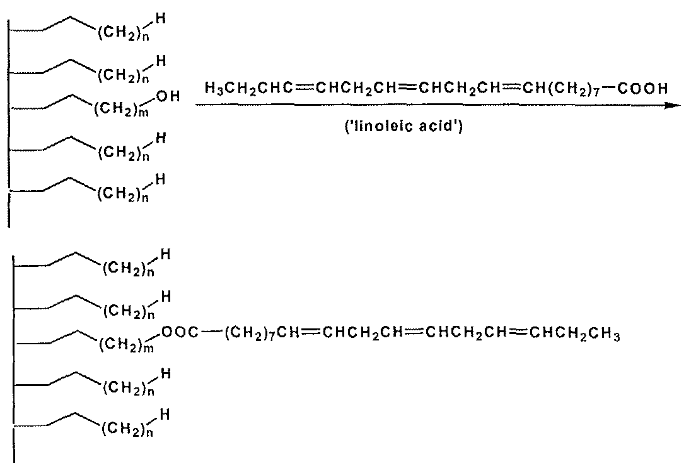


The linoleic part is brought in contact with silver ions, resulting in the complex formation between the triple unsaturated bonds and silver ions. The final sensor is sensitive towards chloride ions. In the presence of excess of

chloride, the sensor also acts as a reference electrode.

In addition, a small FET based reference electrode, like the current HOSFET reference electrode, is simple to integrate with other sensors, in comparison to for instance the conventional kalomel electrode.

Hereafter, the invention will be further explained in relation to particular working examples.

**Example 1**

**Procedure for the preparation of a pH sensitive HOSFET**

An Ion Sensitive Field Effect Transisitor (ISFET) having n-doted silicon regions for the source and the drain areas and a p-doted region for the gate area is etched using 2% hydrofluoric acid during 1-5 minutes to remove the silicon dioxide insulator layer as described in reference 1.
The ISFETs are made by standard MOS technologies.
The dimensions of the gate area are 15 x 500 micrometer. Subsequently, the surface area is reacted with a mixture of 10-undecylenic acid methyl ester and 1-decene (molar ratio 1 : 10) in mesitylene as the solvent according to procedures described in reference 4: A.B. Sieval, V. Vleeming, H. Zuilhof, and E.J.R. Sudhölter, An improved method for the preparation of organic monolayers of 1-alkenes on hydrogen terminated silicon surfaces, Langmuir 15, 8288-8291 (1999). The methyl ester bound to the surface was further hydrolysed by placing the modified surface in boiling acidified water during 30 minutes. The HOSFETs were measured as described in: *A. van den Berg, P. Bergveld, D.N. Reinhoudt, E.J.R. Sudholter, Sensors and Actuators 8, 129-149 (1985).*
The results are shown in Table I

**Example 2**

**Procedure for the preparation of a calcium sensitive HOSFET.**

The HOSFET described in Example 1 is further modified by placing the HOSFET in a acidified aqueous solution containing ionophore A and heated to reflux during 30 min.

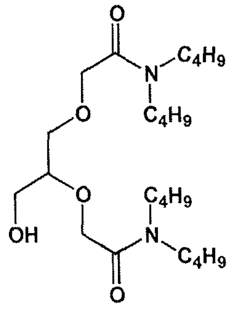

**A**

The synthesis of A is described in reference US Patent 5,238,548

**Example 3**

**Procedure for the preparation of a chloride sensitive HOSFET and its action as reference sensor.**

An Ion Sensitive Field Effect Transisitor (ISFET) having n-doted silicon regions for the source and the drain areas and a p-doted region for the gate area is etched using 2% hydrofluoric acid during 1-5 minutes to remove the silicon dioxide insulator layer as described in reference 1.
The ISFETs are made by standard MOS technologies.
The dimensions of the gate area are 15 x 500 micrometer. Subsequently, the surface area is reacted with a mixture of 10-undecylenyl acetate and 1-decene (molar ratio 1 : 10) in mesitylene as the solvent according to procedures described in reference 4.
The acetyl ester bound to the surface was transesterified by placing the modified surface in boiling acidified water containing linoleic acid during 30 minutes, using methods as described in reference 1.

The linoleic acid modified HOSFET was placed during 2 h.in an aqueous solution containing silvernitrate in the absence of light. Subsequenty, the HOSFET was rinsed with water and finally the HOSFET was placed in aqueous sodium chloride, replacing the nitrate counterions to chloride ions.

### Example 4

**Procedure for the preparation of a conducting polymer-insulator-silicon field effect transisitor**

An Ion Sensitive Field Effect Transisitor (ISFET) having n-doted silicon regions for the source and the drain areas and a p-doted region for the gate area is etched using 2% hydrofluoric acid during 1-5 minutes to remove the silicon dioxide insulator layer as described in reference 1.
The ISFETs are made by standard MOS technologies.
The dimensions of the gate area are 15 x 500 micrometer. Subsequently, the surface area is reacted with a mixture of 10-undecylenyl acetate and 1-decene (molar ratio 1 : 10) in mesitylene as the solvent according to procedures described in reference 1
The acetyl ester bound to the surface was transesterified by placing the modified surface in boiling acidified aqueous solution containing 1-(1,3-dioxo-1,3-dihydroisoindol-2-yl)heptadeca-5,7-diynoic acid (see structure B; *for this compound see reference: H.M. Barentsen, M. van Dijk, H. Zuilhof, and E.J.R. Sudhölter, Thermal and phote oinduced polymerization of thin diacetylene films. Part 1. Phthalimido substituted diacetylenes, Macromolecules 33, 766-774 (2000)*

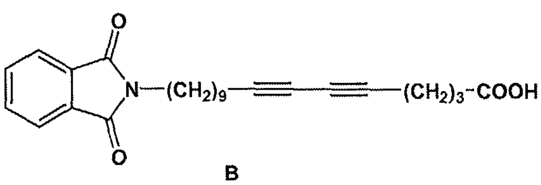

B

during 30 minutes, using methods as described in reference 1. Subsequently the diacetylene units were photopolymerised according to procedures described in reference 5.
The polymerized diacetylenes give rise to a conjugated and hole conducting polymer. The conducting polymer is contacted to a platinum micro electrode. By varying the electrical potential between this platinum microelectrode and the bulk of the silicon, at fixed source drain voltage, the source drain current varies as in a conventional MOSFET (Metal Oxide Semiconductor FET).

TABLE I:

| Measured characteristics of HOSFETs | | |
|---|---|---|
| Example | Noise (mV) | Response |
| 1 | +/- 0.005 | 56 mV/decade between pH 8-4 |
| 2 | +/- 0.005 | 27 mV/decade between pCa 6-2 |
| 3 | +/- 0.005 | No response on changing the pH between 2-8 at a fixed sodium chloride concentration of 0.1 M. |
| 4 | +/- 0.005 | |

It is notes that the diacetylene group may also be positioned in spacer groups of the monolayer forming molecules.
Although the present invention has been described inter alia for a reactive group comprising a particular ionophore, it is noted that any ionophore which could be covalently bond to the monolayer forming molecules having a reactive group is suitable for use. Such ionophores are for instance disclosed in:

P.Oggenfuss, W.E. Morf, U. Oesch, D. Ammann, E. Pretsch, and W. Simon, Anal. Chim. Acta 180, 299 (1986).
D.Ammann, W.E. Morf, P. Anker, P.C. Meier, E. Pretsch, and W. Simon, Ion-Selective Electrode Review 5, 3 (1983).
W.E. Morf, The principles of ion-selective electrodes and of membrane transport, Elsevier, Amsterdam (1981).

## Claims

1. Method for producing a hybrid organic silicon field effect transistor structure, comprising the steps of:

   i) providing a group IV element based semiconductor substrate provided with a source region, gate region and drain region, having at least in the gate region a surface with hydrogen terminated group IV elements; and
   ii) covering at least the gate region with an organic monolayer by covalently reacting monolayer forming molecules with terminated hydrogen of the group IV elements at the surface, which monolayer forming molecules comprise a proximal terminated hydrogen reactive group and a spacer group.

2. Method as claimed in claim 1, wherein the semiconductor substrate is silicon and/or germanium based.

3. Method as claimed in claim 1 or 2, wherein the organic monolayer has a thickness of at least 0.5 nm, preferably at least 0.7 nm, such as 0.6-3.0 nm, preferably 0.7-2.5 nm and more preferably 0.8-2.2 nm.

4. Method as claimed in claims 1-3, wherein the hydrogen reactive group of the layer molecules has the formula

   $$C = R_1 \qquad \text{(Ia)}$$

   or

   $$C \equiv R_2 \qquad \text{(Ib)}$$

   wherein

   $R_1$ is C, O, S, or N-H, and
   $R_2$ is C or N.

5. Method as claimed in claims 1-4, wherein the spacer group comprises an unbranched hydrocarbon chain which may comprise one or more alkylene, alkyne, or aryl groups, wherein the number of carbon atoms in the hydrocarbon chain provides an organic monolayer thickness of at least 0.5nm, and wherein hydrogen atoms may be substituted by a fluoro atom.

6. Method as claimed in claim 5, wherein the hydrocarbon chain is selected from $C_6$-$C_{22}$-alkyl, $C_6$-$C_{22}$-alkylene, $C_6$-$C_{22}$-alkyne optionally substituted with one or more phenyl groups.

7. Method as claimed in claims 1-6, wherein at least a part of monolayer forming molecules comprises a distal reactive group.

8. Method as claimed in claim 7, wherein the length of the spacer group of the layer molecules comprising a distal reactive group is larger than the length of the spacer group of the other layer molecules.

9. Method as claimed in claim 8, wherein the length increase amounts 1-5 carbon atoms, preferably 2-3 carbon atoms.

10. Method as claimed in claim 7-9, wherein the distal reactive group is a sensitive group or a leaving group.

11. Method as claimed in claim 10, wherein the sensitive group comprises a basic group, an acidic group, an ionophore, a phenyl mercury group, an unsaturated fatty acid group optionally complexed with a metal ion, a sugar group, an antigen, an antibody.

12. Method as claimed in claims 1-11, wherein monolayer forming molecules comprise at least two acetylene groups which after polymerisation with neighboring acetylene groups form a conjugated, holes conducting polyacetylene.

13. Method as claimed in claims 1-11, wherein in step ii) the source region and/or drain region is provided with an organic monolayer.

**14.** Hybrid organic silicon field effect transistor structure as obtainable with the method according to claims 1-13.

European Patent Office

# EUROPEAN SEARCH REPORT

Application Number
EP 02 07 6942

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BURIAK ET AL: "Organometallic chemistry on silicon surfaces: formation of functional monolayers bound through Si-C bonds" JOURNAL OF THE CHEMICAL SOCIETY, CHEMICAL COMMUNICATIONS, CHEMICAL SOCIETY. LETCHWORTH, GB, vol. 12, 1 June 1999 (1999-06-01), pages 1051-1060, XP002145037 ISSN: 0022-4936 | 1-7,10, 11,13,14 | G01N27/414 |
| Y | * page 1058, column 2; figures * | 8,9 | |
| Y | SIEVAL A B ET AL: "HIGH-QUALITY ALKYL MONOLAYERS ON SILICON SURFACES" ADVANCED MATERIALS, VCH VERLAGSGESELLSCHAFT, WEINHEIM, DE, vol. 12, no. 19, 2 October 2000 (2000-10-02), pages 1457-1460, XP000966764 ISSN: 0935-9648 * figure 6 * | 8,9 | |
| | | | TECHNICAL FIELDS SEARCHED (Int.Cl.7) |
| A | BURIAK J M: "Organometallic Chemistry on Silicon and Germanium Surfaces" CHEMICAL REVIEWS, 8 MAY 2002, AMERICAN CHEM. SOC., USA, vol. 102, no. 5, pages 1271-1308, XP002218543 * figures 32,47,51,69G * | 2,5,12 | G01N |

-/--

The present search report has been drawn up for all claims

| Place of search | Date of completion of the search | Examiner |
|---|---|---|
| THE HAGUE | 28 October 2002 | Wilhelm, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 07 6942

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHOVELON J M: "SENSITIZATION OF DIELECTRIC SURFACES BY CHEMICAL GRAFTING: APPLICATION TO PH ISFETS AND REFETS" SENSORS AND ACTUATORS B, ELSEVIER SEQUOIA S.A., LAUSANNE, CH, vol. B08, no. 3, 1 June 1992 (1992-06-01), pages 221-225, XP000290474 ISSN: 0925-4005 * abstract * --- | 1,14 | |
| D,A | BARENTSEN ET AL: "Thermal and Photoinduced Polymerisation of Thin Films. 1. Phthalimido-Substituted Diacetylenes" MACROMOLECULES, vol. 33, no. 3, 8 February 2000 (2000-02-08), pages 766-774, XP002218544 * abstract * --- | 12 | |
| A | KWANGWOOK CHOI ET AL: "Hydrogermylation of alkenes and alkynes on hydride-terminated Ge(100) surfaces" LANGMUIR, 3 OCT. 2000, AMERICAN CHEM. SOC, USA, vol. 16, no. 20, pages 7737-7741, XP002218545 ISSN: 0743-7463 * abstract; figures * --- | 2 | TECHNICAL FIELDS SEARCHED (Int.Cl.7) |
| A | SIEVAL ET AL: "Amino-terminated Organic Monolayers on Hydrogen-Terminated Silicon Surfaces" LANGMUIR, 27 NOV. 2001, AMERICAN CHEM. SOC, USA, vol. 17, no. 24, pages 7554-7559, XP002218546 * figure 1 * ----- | 8 | |

The present search report has been drawn up for all claims

| Place of search | Date of completion of the search | Examiner |
|---|---|---|
| THE HAGUE | 28 October 2002 | Wilhelm, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)